# EUROPEAN PATENT APPLICATION

(11) **EP 1 783 638 A1**
(43) Date of publication of application: **09.05.2007**
(21) Application number: 06120386.5
(22) Date of filing: 08.09.2006
(51) Int. Cl.: G06F 17/30

(54) **Method and mobile communication terminal for searching for user data in same**

(30) Priority: 08.09.2005 KR 20050083750
(71) Applicant: Samsung Electronics Co., Ltd., Suwon-si, Gyeonggi-Do (KR)
(72) Inventor: Ahn, Yu-Mi, Gyeonggi-do (KR); Park, Won-Joo, Gyeonggi-do (KR); Shin, Young-Sun, Gyeonggi-do (KR); Lim, Kyoung-Ae, Gyeonggi-do (KR)
(74) Representative: Zimmer, Franz-Josef

(57) **Abstract**

Disclosed is a method for searching for user data in a mobile communication terminal. The method includes setting a search range based on at least one search range limitation condition selected by a user from a plurality of predetermined search range limitation conditions by which user data to be searched may be classified, and detecting and providing user data including a keyword, which is input by the user, within the set search range.

## Description

The present invention relates generally to a mobile communication terminal, and in particular to a mobile communication terminal and a method for searching for user data stored in a mobile communication terminal.

A mobile communication terminal has various supplementary functions including a phone book function, various message services, a game function, a sound source reproduction function, a dynamic image photographing and reproduction function, a picture photographing function, in addition to a basic voice communication function. The increase in such supplementary functions provided in the mobile communication terminal has forthwith increased the type and amount of data stored therein The user data includes data which can be newly stored or deleted while using a mobile communication terminal, or all data relating to the setup of a mobile communication terminal, which can be modified according to the user's intention. For example, user data includes several hundreds of phone numbers registered in a phone book, memos corresponding to each address of a phone book, various image files, dynamic image files, game software programs, various types of messages according to various message services, various ringing sounds, etc.

However, when providing the user data as described above, a conventional mobile communication terminal provides a list of all stored data according to the type of the data, or provides specific data searched for using fixed search conditions. For example, a conventional mobile communication terminal provides a user with a list of all messages classified by a storage position including a received message box, a transmitted message box, etc., or provides only a list of phone numbers searched according to the limitations of a predetermined search range including addresses, user name, etc.

Therefore, a user cannot efficiently search for data because the user cannot establish a desired search environment. Further, when a plurality of data are provided, a user cannot efficiently retrieve the desired data without checking the data one-by-one. Therefore, much search time is required and an user is inconvenienced.

The present invention has been developed to provide a solution at least to the above-mentioned problems occurring in the prior art.

It is the object of the present invention to provide a mobile communication terminal and a method for conveniently searching for user data stored in the mobile communication terminal.

This object is solved by the subject matter of the independent claims.

Preferred embodiments are defined by the subject matter of the dependent claims.

It is an aspect of the present invention to provide a method for quickly searching for user data stored in a mobile communication terminal.

It is another aspect of the present invention to provide a method for establishing a search environment desired by a user.

In order to accomplish the above, according to one aspect of the present invention, there is provided a method for searching for user data in a mobile communication terminal, the method including setting a search range based on at least one search range limitation conditions selected by a user from a plurality of predetermined search range limitation conditions by which user data to be searched can be classified; and detecting and providing user data including a keyword, which is input by the user, within the set search range.

The present invention will be more apparent from the following detailed description taken in conjunction with the accompanying drawings, in which:
FIG. 1 is a block diagram schematically illustrating a communication terminal according to the present invention ;
FIGs. 2A and 2B are flow diagrams illustrating an operation of a mobile communication terminal according to the present invention;
FIG. 3 is a diagram schematically illustrating a display screen when search range limitation conditions are set according to the present invention;
FIGs. 4A and 4B are diagrams illustrating a display screen when details of search range limitation conditions are modified according to the present invention; and
FIG. 5 is a diagram illustrating a display screen while search is executed according to the present invention.

Hereinafter, preferred embodiments according to the present invention will be described with reference to the accompanying drawings. In the following description, a detailed description of known functions and configuration incorporated herein has been omitted for conciseness.

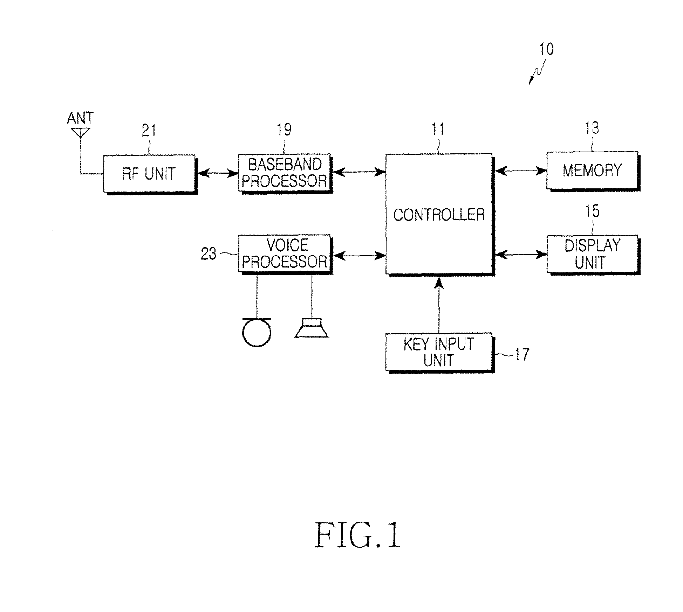

FIG. 1 is a block diagram schematically illustrating a communication terminal according to the present invention. Referring to FIG. 1, the mobile communication terminal 10 includes a controller 11, a memory 13, a display unit 15, a key input unit 17, a baseband processor 19, a Radio Frequency (RF) unit 21, and a voice processor 23.

The controller 11 controls the general operation of the mobile communication terminal. The display unit 15 displays various images from the image information received from a base station or images stored in the memory 13 on a screen under the control of the controller 11. The key input unit 17 corresponding to various functions of the mobile communication terminal includes character keys such as * and #, as well as a plurality of function keys for a menu, a selection, communication, deletion, power/end, volume, photographing, etc.. The key input unit 17 provides the controller 11 with key input data corresponding to keys pressed by a user. Further, the key input unit 17 includes number keys 0 to 9, and a plurality of Hangeul or English characters that are assigned to the number keys.

The RF unit 21 exchanges signals with a mobile communication base station through an antenna. That is, the RF unit 21 modulates transmission signals input from the controller 11 through the baseband processor 19 to transmit RF signals, through the antenna, and demodulates RF signals received through the antenna to provide the demodulated signals to the controller 11 through the baseband processor 19. The baseband processor 19 processes baseband signals exchanged between the RF unit 21 and the controller 11.

The voice processor 23 connected to the controller 11, and a microphone MIC and a speaker SPK connected to the voice processor 23 are used for phone communication and voice recording.

The memory 13 stores programs for processing and controlling the controller 11, reference data, various renewable data for storage, etc., which is provided as a working memory of the controller 11. The memory 13 stores program data for a search menu according to the present invention. The search menu is a menu for allowing a user to set both a search environment of user data stored in the memory 13, and a search mode for searching for the user data in the search environment. The user data represent data, which a user can newly store or delete while using the mobile communication terminal, or all data relating to the setup of the mobile communication terminal, which can be modified according to the user's intention. The user data include phone book data, various image files, dynamic image files, game software programs, various types of messages according to various message services, various ringing sounds, etc.

The search menu can be provided to corresponding to the type of user data according to the present invention. For example, the search menu can include a phone book search menu for searching for phone book data, a message search menu for searching for a message stored in relation to a message service, an image search menu for searching for image files, a dynamic image search menu for searching for dynamic image files, etc. According to the present invention, the search menu may also include a search menu for searching for more than two different types of integrated user data, or a search menu for searching for entire user data.

If a search mode is set through the search menu according to the present invention, a search environment of user data is actually set, and a search option including a menu for executing a search in the set search environment is provided. The search option includes a search environment setup menu, a search execution menu and a prior search result menu according to the present invention. The search environment setup menu is a menu for setting a search range according to user selection, the search execution menu is a menu for commanding the search execution of data including a keyword, which is inputted by a user, within the search range having been set through the search environment setup menu, and the prior search result menu is a menu for providing the most recent search results.

The search environment setup menu may also include a search range setup menu and a search range release menu according to the present invention. The search range setup menu is a menu for including a plurality of search range limitation conditions distinguished by various criteria, and limiting a search range corresponding to search range limitation conditions selected by a user, and the search range release menu is a menu for releasing the set search range.

The plurality of search range limitation conditions may be determined corresponding to all criteria by which user data to be searched can be classified. The search range limitation conditions may generally include the storage position of user data to be searched, a position into which a keyword is inserted within one user data, time, the degree of importance, the detailed type of user data to be searched, etc. Further, the search range limitation conditions may also be determined according to the specific characteristic user data to be searched.

For example, if the user data to be searched correspond to an image file, the capacity or resolution of the image file may be one of the search range limitation conditions, in addition to the afore-described search range limitation conditions. In another example, if the user data to be searched correspond to a message, where the message is checked, whether the message has an attached file, etc., may be one of the search range limitation conditions.

Each of the search range limitation conditions includes a plurality of details by which a corresponding search range may be set in detail according to characteristics. For example, if the search range limitation conditions correspond to the storage position of user data, details may also be each folder in which the user data to be searched may be stored. If the search range limitation conditions correspond to a position into which the keyword is inserted, details can also be a title, content, name, etc.

The user sets the search range of user data to be searched, and searches for desired data within the search range by means of the search menu as described above. A detailed process is described as follows. If a search mode setup for certain user data is requested, the controller 11 provides a keyword input window and a current search environment. If the user selects a search menu, the controller 11 provides the submenu of the search menu. If the user selects a menu for setting a search environment, i.e. a search range setup menu or a search range release menu, the controller 11 provides a list of search range limitation conditions. Herein, if the user selects the search range setup menu, the controller 11 provides a list of all search range limitation conditions which may be provided from the current selected search menu. The user selects desired search range limitation conditions from the provided search range limitation conditions. The controller 11 sets a value of details within each of the selected search range limitation conditions as a default value, thereby setting a search range according to user selection.

Then, if input for changing the details of the set search range limitation conditions is received from the user, the controller 11 provides a list of details of the search range limitation conditions which the user wants to change. The user changes a value of the details with reference to the list of the details, and the controller 11 sets the changed value of the details.

The user may also release the preset search range limitation conditions through the search range release menu in the state as described above. If there exists input for selecting the search range release menu, the controller 11 provides a list of the currently set search range limitation conditions, and the user selects search range limitation conditions which the user wants to release. Then, the controller 11 releases the selected search range limitation conditions. Further, the search range set through the afore-described process may also be set to be maintained even when the current search mode is terminated and the search mode is set again according to user selection. Also, the search range may be set to return to an initial state if the current search mode is terminated.

If the search range setup is completed, the user inputs a keyword to the keyword input window. If the user requests a search execution, the controller 11 searches for user data including the keyword input to the keyword input window within the set search range, and provides the results of the search to the user.

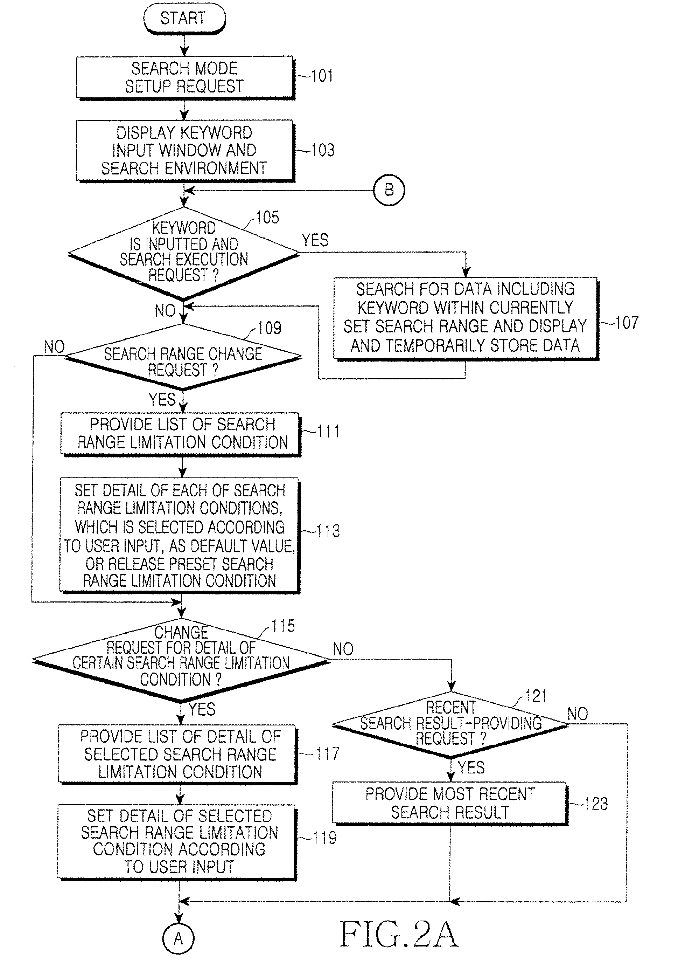

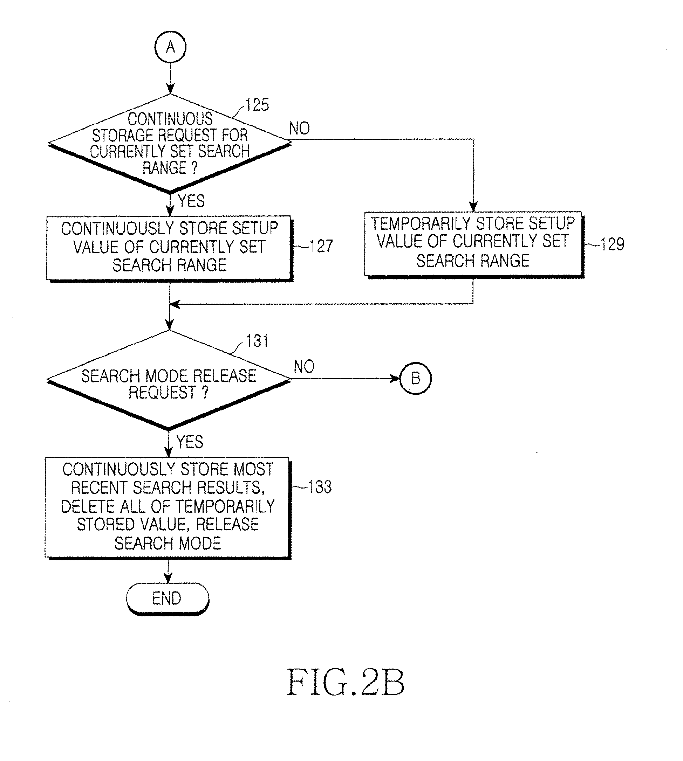

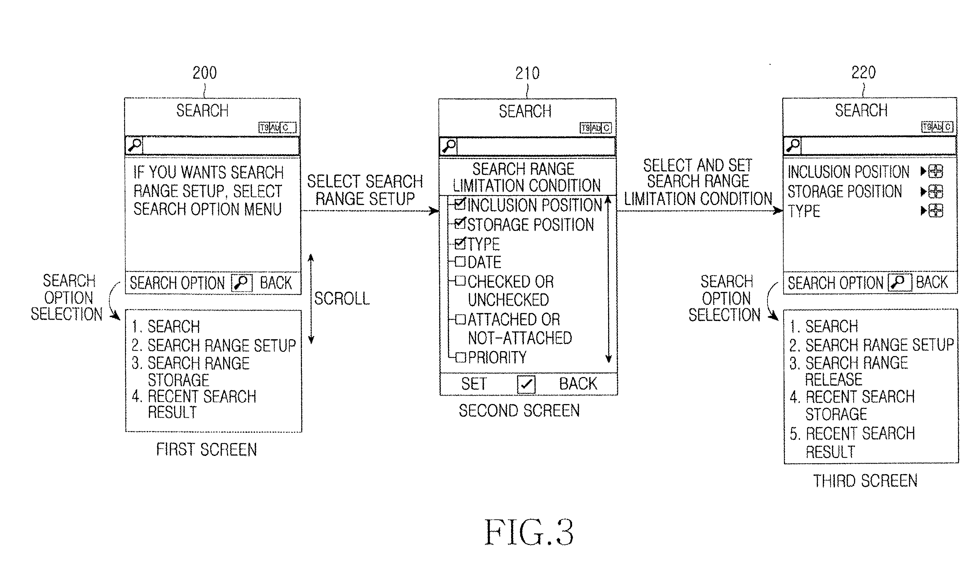

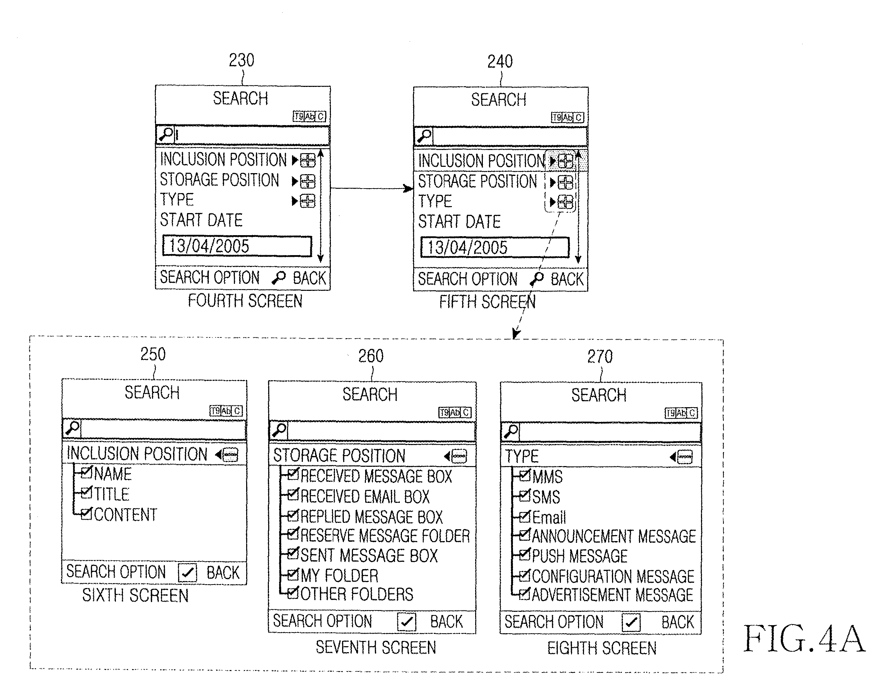

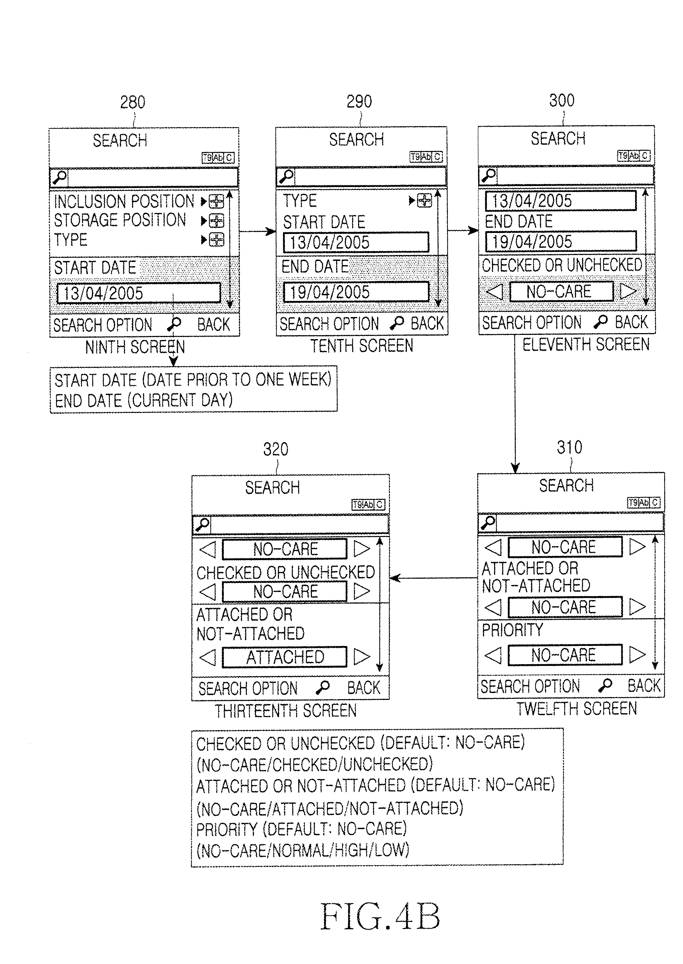

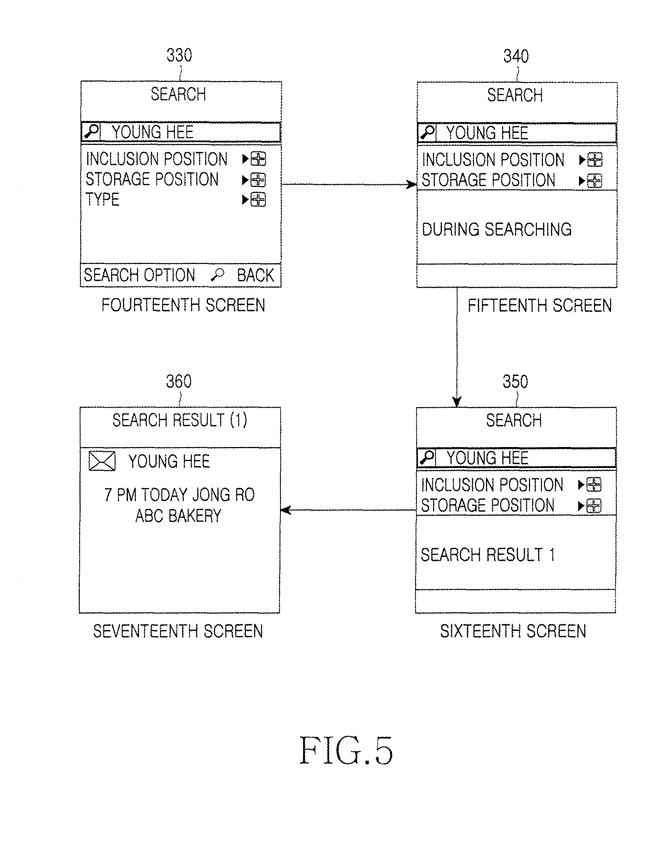

The operation process of the controller 11 as described above is illustrated in FIGs. 2A and 2B. Further, when a message is searched for from the user data according to the operation of the controller 11, the change in a display screen based on the search range setup and the search execution process is illustrated in FIGs. 3 to 5. FIG. 2 is a flow diagram illustrating an operation of the mobile communication terminal according tithe present invention, FIG. 3 is a diagram illustrating a display screen when the search range limitation conditions are set according to the present invention, FIGs. 4A and 4B are diagrams illustrating a display screen when the details of the search range limitation conditions are modified according to the present invention, and FIG. 5 is a diagram illustrating a display screen while search is executed according to the present invention.

Hereinafter, the operation process of the controller 11 and the change in the display screen according to the present invention will be described with reference to FIGs. 2 to 5.

Referring to FIG. 2A, if a search mode setup request for certain user data is received from a user in step 101, step 103 is performed. In step 103, the controller 11 displays a keyword input window and a search environment. For example, if a search mode setup request for a message transmitted/received through a message service is received from a user according to the present invention, the controller 11 can display a display screen such as the first screen 200 of FIG. 3. The first screen 200 is a screen displayed in a state in which the user has not yet set a search range , which includes a keyword input window, a search environment guidance area in which a message for guiding a search range setup method is displayed, a search option for selecting a submenu necessary for search range setup when the search range setup method is selected, etc.

If a keyword is inputted and a search execution request is received from the user in step 105, step 107 is performed. Otherwise, step 109 is performed. In step 107, the controller 11 searches for data including the input keyword within the currently set search range, and displays and temporarily stores the data. Then, step 109 is performed.

For example, referring to FIG. 3, if the user inputs a keyword to the keyword input window through a key operation and inputs a confirmation key on the first screen 200, the controller 11 searches for data including the input keyword. If the search option is selected, the controller 11 displays submenus including search, search range setup, search range storage, and recent search results. The menus are scrolled according to key input and are provided within a screen equal to the first screen 200. Then, if input for selecting the menu "1. search" is received from the user, the controller 11 searches for the data including the input keyword. Since a search range has not been set by the user in the first screen 200, a search is done for all messages stored in the mobile communication terminal.

In step 109, the controller 11 determines if a search range change request is received from the user. If the search range change request is received from the user, step 111 is performed. Otherwise, step 115 is performed. That is, as illustrated in FIG. 3, the controller 11 determines if the search range setup menu or the search range release menu is selected from the submenu of the search option. In step 111, the controller 11 provides a list of search range limitation conditions at the user's search range change request. In step 113, the controller 11 sets details of each of the search range limitation conditions, which is selected according to user input, as a default value, or releases the preset search range limitation conditions. Then, step 115 is performed. Referring to FIG. 3, the user selects the search range setup menu in the first screen 200. Accordingly, the controller 11 displays a list of search range limitation conditions, which may be set in message search, as illustrated in the second screen 210.

The list of search range limitation conditions displayed in the second screen 210 includes at least an inclusion position, a storage position, a type, a date, whether a message has been checked, existence or absence of an attached file, and priority, which are displayed in a tree structure. The inclusion position is a condition for restricting a position into which a keyword is actually included in a message structure, the storage position is a condition for restricting a search-target message based on the storage position of a message, and the type is a condition for restricting a search-target message based on the type of a message. The date is a condition for restricting a search-target message based on the time point at which a message is stored, the condition of whether a message has been checked is a condition for restricting a search-target message based on whether a user has checked the message, the existence or absence of an attached file is a condition for restricting a search-target message based on whether an attached file exists, and the priority is a condition for restricting a search-target message based on the priority of a message.

The second screen 210 shows three types of search range limitation conditions including the inclusion position, the storage position and the type which have been selected from the displayed list of search range limitation conditions. In such a state, if confirmation input is received from the user, the controller 11 sets a value of details of each of the selected search range limitation conditions as a default value, sets a search range, and displays the third screen 220. That is, the inclusion position, the storage position and the type, which correspond to the search range limitation conditions selected in the search range environment guidance area, are displayed. When the search range limitation conditions are not displayed within one screen because the number of the set search range limitation conditions is too many, the user can check all search range limitation conditions through a scroll function. If the search option is selected in the state where the search range has been set by the user as illustrated in the third screen 220, the controller 11 additionally provides the search range release menu, together with the afore-described submenu.

In step 115, the controller 11 determines if a change request for details of certain search range limitation conditions is received from the user. If the change request for details is received from the user, step 117 is performed. Otherwise, step 121 is performed. In step 117, the controller 11 provides a list of details of the selected search range limitation conditions. In step 119, the controller 11 sets the details of the selected search range limitation conditions according to user input. Then, the procedure progresses to A, and step 125 of FIG. 2B is performed. For example, in a state in which a plurality of search range limitation conditions have been set as illustrated in the fourth screen 230 of FIG. 4A, if a cursor is located on certain search range limitation conditions according to user selection as illustrated in the fifth screen 240 and a predetermined detail key is input, the controller 11 provides a list of details of corresponding search range limitation conditions.

According to the present invention, details of each of the message search range limitation conditions are as set forth below. First, the inclusion position includes details such as a name, a title and content as illustrated in the sixth screen 250, and the details are displayed in a tree structure within the inclusion position. Herein, default values of the details within the inclusion position are selected. The name corresponds to details for allowing a message, in which a keyword is included in the name of a message creator, to be searched, the title corresponds to details for allowing a message, in which a keyword is included in the title of a message, to be searched, and the content corresponds to details for allowing a message, in which a keyword is included in the content of a message, to be searched.

The storage position of the search range limitation conditions includes details such as a received message box, a received email box, a replied message box, a reserve message folder, transmitted message box, my folder, and other folders as illustrated in the seventh screen 260, and such details are displayed in a tree structure within the storage position. Herein, default values of the details are selected. The received message box corresponds to details for restricting only messages stored in the received message box as a search object, the received email box corresponds to details for restricting only messages stored in the received email box as a search object, and the replied message box corresponds to details for restricting only messages stored in the replied message box as a search object. The reserve message folder corresponds to details for restricting only messages stored in the reserve message folder as a search object, the transmitted message box corresponds to details for restricting only messages stored in the transmitted message box as a search object, the "my folder" corresponds to details for restricting only messages stored in the "my folder" as a search object, and the "other folders" correspond to details for restricting only messages stored in the "other folders" as a search object

The type of the search range limitation conditions includes details such as a Multimedia Messaging Service (MMS), a Short Messaging Service (SMS), an Email, an announcement message, a push message, a configuration message and an advertisement message, as illustrated in the eighth screen 270, and the details are displayed in a tree structure within the type. Herein, default values of the details are selected. The details restrict the type of a message to be searched.

The date of the search range limitation conditions as illustrated in the second screen 210 of FIG. 3 includes details such as a search start date and a search end date as illustrated in the ninth screen 280 and the tenth screen 290 of FIG. 4B. The search start date and the search end date are applied on the basis of a date at which a message is stored, the default value of the start date is a date of one week prior to the current day, and the default value of the end date is the current day.

The condition of whether a message has been checked from among the search range limitation conditions on the eleventh screen 300 includes details such as no-care, checked and unchecked, and a default value is no-care. The priority of the search range limitation conditions on the twelfth screen 310 includes details such as no-care, normal, high and low, and a default value is no-care. The existence or absence of an attached file from among the search range limitation conditions on the thirteenth screen 320 includes details such as no-care, attached and not-attached, and a default value is no-care.

The user selects each of the search range limitation conditions, checks the details of the selected search range limitation conditions, and selects and sets desired details, thereby establishing a value of details of each of the search range limitation conditions. For example, in a state in which the inclusion position, the storage position and the type have been selected and set as the search range limitation conditions as illustrated in the third screen 220 of FIG. 3, the user selects predetermined search range limitation conditions in which the user wants to change details thereof. If the user selects the inclusion position, the controller 11 provides the list of the details provided in the inclusion position. If the user selects at least one detail from the title, the name and the content, the controller 11 sets limitation conditions corresponding to the at least on selected detail, thereby limiting the search range. The operation process of steps 115, 117 and 119 in FIG. 2A corresponds to a process in which the details of the search range limitation conditions as illustrated in FIGs. 4A and 4B are set according to user selection.

Referring to FIG. 2A again, in step 121, if a recent search result-providing request is received from the user, step 123 is performed. Otherwise, the procedure progresses to A, and step 125 of FIG. 2B is performed. For example, the controller 11 determines if the recent search result menu is selected from the submenu of the search option as illustrated in FIG. 3. In step 123, the controller 11 provides the most recent search results. Then, the procedure progresses to A, and step 125 of FIG. 2B is performed. In step 125, the controller 11 determines if there exists a continuous storage request for the currently set search range. If there exists the continuous storage request, step 127 is performed. Otherwise, step 129 is performed. In step 127, the controller 11 continuously stores the setup value of the currently set search range. Then, step 131 is performed. In step 129, the controller 11 temporarily stores the setup value of the currently set search range because there exists no continuous storage request. Then, step 131 is performed. Corresponding data are continuously stored in the continuous storage means even when the currently set search mode is released. If there exists a search mode release request in step 131, step 133 is performed. Otherwise, the procedure progresses to B, i.e. step 105 of FIG. 2A, and step 105, 107, 109, 111, 113, 115, 117, 119, 121, 123, 115, 127, 129 and 131 are repeated. In step 133, the controller 11 continuously stores the most recent search results, deletes all of the temporarily stored values, releases the search mode, and ends the operation process. That is, according to the present invention, the search range limitation conditions having been set through the process as described above are released if the search mode ends as long as the continuous storage request is not received from the user. Further, the search results are also deleted, except for the most recent search results. If the currently set search range limitation conditions are continuously stored, a search environment is established according to the currently set search range limitation conditions are established when the subsequent search mode is set. According to the present invention, it may also be possible that a search environment is continuously maintained before search range limitation conditions having been set without user selection are released.

FIG. 5 is a diagram illustrating the change in the display screen while the search is executed in a state in which the search range limitation conditions for a message have been set by a user as described above. Referring to FIG. 5, in a state in which the search range limitation conditions, such as the inclusion position, the storage position and the type, have been set as illustrated in the fourteenth screen 330, if a keyword "young hee" is input and then a search execution is requested, the controller 11 searches for messages including the keyword "young hee" within the set search range. While the search is executed, a guidance screen representing "during searching" is displayed as illustrated in the fifteenth screen 340. If the search is completed, the controller 11 provides the number of detected messages as illustrated in the sixteenth screen 350, and finally displays the detected messages as illustrated in the seventeenth screen 360.

FIGs. 3 to 5 employ a case where the user data to be searched correspond to a message as an example. However, a similar process can be applied even when the search object is different user data.

According to the present invention as described above, from among a plurality of search range limitation conditions determined based on various criteria by which user data to be searched can be classified, search range limitation conditions selected by a user are established, a search range of user data to be searched is restricted, user data including a keyword input by the user are detected and provided within the established search range, so that it is possible to conveniently, quickly and efficiently search for the user data.

Although preferred embodiments of the present invention has been described for illustrative purposes, those skilled in the art will appreciate that various modifications, additions and substitutions are possible, without departing from the scope of the invention as disclosed in the accompanying claims.

## Claims

1. A method for searching for user data in a mobile communication terminal, the method comprising the steps of:
setting a search range based on at least one search range limitation condition selected by a user from a plurality of predetermined search range limitation conditions by which user data to be searched may be classified; and
detecting and providing user data including a keyword, which is input by the user, within the set search range.

2. The method as claimed in claim 1, wherein the user data include data, which the user may presently store or delete while using the mobile communication terminal, or all data relating to setup of the mobile communication terminal, which may be modified according to user's intention.

3. The method as claimed in claim 1 or 2, wherein the user data includes phone book data, various image files, dynamic image files, game software programs, various types of messages according to various message services, and various ringing sounds.

4. The method as claimed in one of claims 1 to 3, wherein the plurality of search range limitation conditions are predetermined according to each of various types of user data.

5. The method as claimed in one of claims 1 to 4, wherein the plurality of search range limitation conditions include a plurality of details for setting search range limitation conditions in detail according to characteristics.

6. The method as claimed in claim 5, wherein the step of setting the search range comprises:
providing all search range limitation conditions relating to the user data to be searched at a user's request;
setting said at least one search range limitation conditions selected by the user from all of the provided search range limitation condition;
providing a plurality of details included in the search range limitation conditions selected by the user from the set search range limitation conditions; and
setting a value of details selected by the user from the plurality of details according to user input, and establishing the search range.

7. The method as claimed in one of claims 1 to 6, wherein a setup value of the search range is continuously maintained at a user's request even when a search mode is reset again.

8. The method as claimed in one of claims 1 to 7, further comprising providing most recent search results according to a request for recent search results.

9. The method as claimed in claim 6, wherein the step of setting said at least one search range limitation condition comprises setting a default value of details included in said at least one search range limitation condition, which are selected by the user from all of the provided search range limitation conditions, and setting corresponding search range limitation conditions.

10. The method as claimed in claim 5, wherein, when the user data to be searched correspond to various types of messages according to various message services, the search range limitation conditions include a position in which the keyword is included, a message storage position, a message type, a date, whether a message has been checked, existence or absence of an attached file, and priority.

11. The method as claimed in claim 9, wherein the position in which the keyword is included has details such as a name, a title and content, the message storage position has details such as a received message box, a received email box, a replied message box, a reserve message folder, a transmitted message box, my folder, and other folders, the message type has details such as an MMS, an SMS, an Email, an announcement message, a push message, a configuration message and an advertisement message, the date has details such as a search start date and a search end date, the condition of whether a message has been checked has details such as no-care, checked and unchecked, the existence or absence of an attached file has details such as no-care, attached and not-attached, and the priority has details such as no-care, normal, high and low.

12. The method as claimed in claim 11, wherein the details of the search range limitation conditions are displayed in a tree structure according to the search range limitation conditions.

13. A mobile communication terminal adapted to search for user data, wherein said mobile communication terminal comprises:
means for setting a search range based on at least one search range limitation condition selected by a user from a plurality of predetermined search range limitation conditions by which user data to be searched may be classified; and
means for detecting and providing user data including a keyword, which is input by the user, within the set search range.

14. The mobile communication terminal of claim 13 adapted to operate according to one of claims 2 to 12.
